# EUROPEAN PATENT APPLICATION

(11) **EP 2 065 798 A1**
(43) Date of publication of application: **03.06.2009**
(21) Application number: 08160466.2
(22) Date of filing: 15.07.2008
(51) Int. Cl.: G06F 7/10, G06Q 30/00, H04L 29/06, G06Q 20/00

(54) **Method for performing secure online transactions with a mobile station and a mobile station**

(30) Priority: 26.11.2007 EP 07121534
(71) Applicant: BIOMETRY.com AG, 6055 Alphach (CH)
(72) Inventor: Blessing, Werner, CH-6048, Horw (CH)
(74) Representative: Rutz & Partner

(57) **Abstract**

The method, which allows performing secure online transactions with a mobile station (2; 2A, 2B), comprises the steps of
a) registering the user of the mobile station (2) at a service provider (1) by recording and storing the users credentials and capturing biometric data, such as audio and video samples, in a database (12) ;
b) setting up a connection between the mobile station (2) and the authentication server (11) of the service provider (1) and forwarding biometric data that are captured from the user via input devices (21, 22) of the mobile station (2) to the authentication server (11) of the service provider (1);
c) authenticating the user by comparing the biometric data received from the mobile station (2) with corresponding biometric data retrieved by the authentication server (11) from the database (12) and checking whether said biometric data match;
d) generating and forwarding an authentication certificate (5) from the authentication server (11) to the mobile station (2);
e) transferring the authentication certificate (5) from the mobile station (2) to a vendor's transaction server (31) for a transaction to be performed between the user and the related vendor; and
f) verifying the authentication certificate (5) by the transaction server (31) that proceeds with the execution of the transaction in the event that the authentication certificate (5) is valid.

## Description

The present invention relates to a method for performing secure online transactions with a mobile station and to a mobile station.

### BACKGROUND OF THE INVENTION

As described in [1], US 7,207,480 B1, in a transaction, in which a user charges payment to an account rather than paying cash, the merchant may seek to authenticate the user's identity before allowing the transaction to proceed.

One way to do this is for the user to show a government-issued picture ID, such as a driver's license. In credit card transactions, another way is to have a photo of the user permanently embedded in the user's credit card, so the user shows the photo when presenting the credit card for payment. The merchant can look at a government issued ID or at a photo embedded in the user's credit card, and, by comparing the image with the appearance of the user, the merchant can authenticate the user with a fair amount of certainty.

Further described in [1] is the authentication of a user in so called "m-wallet" (mobile wallet) transaction. In an m-wallet transaction, a user presents a properly equipped wireless handheld device, such as a Bluetooth-enabled mobile telephone, as a form of payment for goods or services. Typically, a merchant system will communicate wirelessly with the handheld device, to acquire payment information, such as a credit card or checking account number. To a merchant, however, it may be difficult to determine whether the user of the handheld device is an authorized user or an unauthorized user (such as a thief). This poses a risk to the authorized user of the occurrence of unauthorized charges on his account, and further poses the risk to the vendor that the authorized user will later repudiate unauthorized transactions and request charges to be refunded.

In order to avoid these problems a digital photo authentication system is proposed in [1] that allows digital photos to be used as a form of photo identification on a mobile station, such as a mobile telephone or smart card. This system may be employed, for example, in m-wallet transactions, in which the user of a mobile station wishes to pay a vendor for goods or services.

In the m-wallet transactions disclosed in [1], a vendor requests photo identification from the user of the mobile station. In response to the request, a digital image of the authorized user or owner of the mobile station is displayed on the screen of the mobile station.

The mobile station may retrieve the image of the authorized user, together with a trust-certification of the image, from a service provider. Hence this system allows firmly linking any image that is stored at a service provider with the mobile station of the user. Authentication however must be done by the vendor, which burdens the vendor with a highly difficult task. As stated above the authentication of the user is done with a fair amount of certainty only. An illegitimate user of the mobile station may even have prepared himself to look alike the rightful owner of the mobile station. Hence, in the event that a clever imposter is illegally using the mobile station, it may be extremely difficult or impossible for the vendor to discover the fraudulent intentions. Further, the authentication procedures depend on personnel of the vendor that will not consistently maintain the required level of attention. Still further, due to the technical restrictions that do not allow displaying the image in a dimension that would be required to conveniently compare the actual appearance of the user with the retrieved image on the mobile station, a high level of uncertainty will remain.

As a consequence, the vendor's risk that the authorized user will later repudiate unauthorized transactions and request charges to be refunded can not be excluded.

Hence, particularly for transactions that require a high security level, the method disclosed in [1] will not be applicable. The requirement for the authentication procedures to be executed by the personnel of the vendor will exclude the applicability of this method in various business areas.

The m-wallet transactions described in [1] further involve the wireless transfer of confidential and sensitive data, such as a credit card number or a checking account number, to the merchant system.

Hence, not only the vendor but also the client is exposed to significant risks. The transferred data could be exploited by an unfaithful vendor or a third party, which gets hold of the data, for example by attacking the computer systems of the vendor.

The problem of disclosing credit card information to a vendor is further described in [2], US 2003/0171993 A1. In order to avoid this problem, a method for implementing electronic payment transactions is disclosed in [2], which makes use of a mobile station such as a mobile telephone. In this method, a payment request is first sent from the mobile station to a payment handling center. At the same time as or after transmission of the payment request, the payment modalities, such as the name of the client's name, a credit card number and the required amount, are sent from the mobile station to the payment handling center. Each payment transaction is allocated an individual transaction code, which is transmitted from the payment handling center to the client's mobile station as soon as the transaction has successfully been completed.

With this method, the mobile station of the client and not the client himself is identified. Hence, the problem discussed in [1], as described above, is not solved. A further disadvantage of this method is that a connection must be set up to the payment handling center and data must be entered and transferred, whenever a transaction is performed. However, setting up connections and entering data is not only inconvenient but also prone to error. In the event that data is not correctly entered, the transaction will fail.

Hence, it would be desirable to provide an improved method for performing secure online transactions with a mobile station that avoids the above described problems. It is a further object of the invention to provide a mobile station that operates according to the inventive method.

It would be desirable in particular to provide a method that offers a significantly higher level of security to the vendor, particularly avoiding repudiation of the performed transactions by the rightful owner of the mobile station.

More particularly, it would be desirable to provide a method that, in case of theft of the mobile station by an imposter, avoids the misuse of the mobile station.

Further, it would be desirable to provide a method that avoids the transfer of confidential and sensitive data to the vendor.

Still further, it would be desirable to provide a method that does not require the client to perform error-prone manipulations and to set up a connection to a third party, when a transaction shall be performed. Further, the client shall not be burdened with the handling of PIN's, keys or passwords.

### SUMMARY OF THE INVENTION

The above and other objects of the present invention are achieved by a method and mobile station according to claim 1 and 12 respectively.

The method, which allows performing secure online transactions with a mobile station, such as a mobile telephone or a personal digital assistant, comprises the steps of
a) registering the user of the mobile station at a service provider by recording and storing the users credentials and capturing biometric data, such as audio and video samples, in a database;
b) setting up a connection between the mobile station and the authentication server of the service provider and forwarding biometric data that are captured from the user via input devices of the mobile station to the authentication server of the service provider;
c) authenticating the user of the mobile station by comparing the biometric data received from the mobile station with biometric data of the registered owner of this mobile station that are retrieved by the authentication server from the database of the service provider and checking whether said biometric data match;
d) generating and forwarding an authentication certificate from the authentication server to the mobile station in the event that the user of the mobile station has successfully been authenticated;
e) transferring the authentication certificate from the mobile station to a vendor's transaction server for a transaction to be performed between the user and the related vendor; and
f) verifying the authentication certificate by the transaction server that proceeds with the execution of the transaction in the event that the authentication certificate is valid. The inventive method provides to all involved parties of a transaction, such as a banking transaction or a sales transaction, a high level of security. By registering and authenticating the owner of the mobile station with the service provider, a strong binding of the mobile station to its owner is achieved.

A client that has been registered at a service provider, which can be a Certificate Authority, a Credit Card Company, and/or any Finance Institute, can be authenticated by a vendor via the client's mobile station with a high level of security. In response to successful completion of authentication procedures, an authentication certificate is forwarded to the mobile station. Hence, the mobile station is the carrier of the authentication certificate which allows the user of the mobile station to prove that he is the owner of the claimed identity.

On the one hand, the vendor may rely onto the authentication certificate with a high level of trust. Due to the high level of security the risk of repudiation of liability by the owner of the mobile station for executed transactions may be excluded even by contract.

On the other hand, the registered owner of the mobile station enjoys a high level of protection against unlawful exploitation of the mobile station in the event that it is stolen.

Further, due to the automatic performance of the verification processes, both the client and the vendor can perform the transactions with little effort in a short time.

The client, who is the owner and user of the mobile station, is not burdened with entering transaction data into the mobile station and setting up a connection to the service provider.

The user of the mobile station can perform the authentication procedures at any convenient time, e.g. at home or in the office, e.g., when planning transactions.

After the transfer and verification of the authentication certificate the prime object of the invention, namely the correct identification of the client, is achieved. Hence, the basis of the transaction is established, which then can be performed in various ways.

The vendor may be satisfied with the fact that the identity of the client had been established. He may sell the requested goods and send the client subsequently an invoice.

Alternatively, the authentication certificate may contain or be transferred together with credit card information or banking information to the transaction server of the vendor, which can debit the due amount to the client's account at the Credit Card Company or at the Finance Institute. Alternatively the Finance Institute may send the vendor a credit note.

Hence, the present invention allows a Credit Card Company to replace Credit Cards completely by mobile stations and thus significantly reduce costs. The Credit Card Company may cooperate with the operator of a telecommunication network and introduce mobile stations that are usable as standard telephones and are equipped with a camera and a program module that allows execution of the inventive method.

As a certificate authority the service provider may ensure that clients are correctly identified. The service provider would close a contract with the vendor and thus enable the vendor to verify the authentication certificates himself. For this purpose the service provider would deliver all the required data to the vendor. Alternatively the service provider could offer to verify the authentication certificates himself. For this purpose a connection would be set up between the transaction server of the vendor and the authentication server of the service provider.

Further, the service provider may provide services of a Finance Institute or a Credit Card Company and transfer the agreed transaction value to the vendor's account after the verification of the authentication certificate.

In a further embodiment the method may comprise the additional steps of storing identification data of the mobile station, such as the International Mobile Equipment Identity IMEI and/or the Mobile Subscriber ISDN Number MSISDN in the database of the service provider during registration procedures. This would allow the service provider to perform authentication procedures and the vendor to execute the requested transaction, in the event that the identification data that has been transferred from the mobile station to the authentication server or to the transaction server match with the corresponding identification data stored in the database of the service provider or the vendor.

In the most preferred embodiment, the method comprises the steps of executing challenge/response procedures in order to authenticate the user of the mobile station by forwarding at least one random challenge from the authentication server to the mobile station, capturing a corresponding response, preferably a multimodal response of the user simultaneously with the input devices of the mobile station, such as a microphone and a camera, and transmitting the captured biometric data to the authentication server.

After the biometric data received from the mobile station has been compared with the related biometric data stored in the database, the authentication server generates an authentication certificate. This authentication certificate preferably consists of an encoded graphical image such as a one- or two-dimensional bar code that preferably is combined with a photo of the owner of the mobile station. However, the authentication certificate may have any physical form (e.g. consisting of one or a plurality of electrical or optical signals), any mathematical form (e.g. figures and numbers or a key of an asymmetrical key pair) and any graphical form (1D-, 2D- or 3D-images). Further, the authentication certificate may comprise various data of the concerned parties and the related equipment, such as identification data of the client, identification data of the mobile station, data relating to the service provider and its equipment, credit card or banking information and/or a time stamp indicating the time the authentication certificate was issued. Hence, based on these data the authentication certificate can be verified, allowing the transaction to be executed.

The authentication certificate may be signed with a private key of the service provider that allows automatic identification of the service provider and the user mentioned in the certificate and avoiding any repudiation attempts.

Since the authentication certificate may allow the execution of transactions involving a highly transaction value, it can be protected with further steps of the inventive method. In a preferred embodiment the user may activate, deactivate or erase the authentication certificate preferably by means of a password or by means of recording and analysing the user's voice or voice commands. The owner of the mobile station can therefore deactivate or erase an authentication certificate whenever it is no longer required. Further, the authentication certificate is preferably protected by a password that is entered whenever the execution of a transaction is required. As an alternative a fingerprint reader could be provided on the mobile station. With these measures, the authentication certificate can be activated within seconds providing further security without any significant burden to the user and the vendor.

In a further important embodiment, biometric data are captured from the input devices of the mobile station whenever it is used in order to authenticate the current user. For this purpose biometric data obtained from the input devices of the mobile station compare with biometric data stored in the memory of the mobile station. In the event that the biometric data fail to match, the authentication certificate is preferably deactivated or even erased. The owner of the mobile station would then be required to revive the stored authentication certificate by providing a password and/or biometric data or to obtain a new certificate from the service provider.

Preferably a trust level value is maintained in the mobile station that may be part of the authentication certificate and that represents the current status of the authentication certificate and that is changed depending on
a) the result of external authentication procedures performed by the authentication server, and/or
b) the result of internal authentication procedures performed by the mobile station that processes biometric data that were captured during the use of the mobile station, and/or
c) the length of the time period, which started after the completion of the last authentication procedures performed by the authentication server or the mobile station.

Each authentication certificate may be given a maximum lifetime that preferably is shorter than 24 hours, starting after the external authentication of the user by the authentication server and the issuance of the authentication certificate. In addition the time limit since the last use of the mobile station, and thus the last internal authentication, is preferably set to less than four hours. With each use of the mobile station the trust level can be increased accordingly. Hence, after a period of three hours, in which the mobile station has not been used, the trust level may be in the range of one third of the original value. With the use of the mobile station by the owner the task level can be returned at once or stepwise to the original value.

The use of a fingerprint reader in addition or as an alternative allows achieving an extremely high trust as well.

The transaction value is preferably coupled to a valid authentication certificate and to the current trust level value. Low trust level values will be sufficient for the execution of transactions with a low transaction value. In the event that the transaction value is higher, then an internal authentication may be required and requested by the mobile station or the transaction server. For very high transaction values, the user may be requested to obtain a new authentication certificate from the service provider. For example if the user requests the transfer of a large amount of money at a bank the highest trust level value may be required, and thus the download of a new certificate from the service provider may be mandatory. In the event that the trust level value has fallen under a certain limit the authentication certificate may be revoked.

### BRIEF DESCRIPTION OF THE DRAWINGS

Some of the objects and advantages of the present invention have been stated, others will appear when the following description is considered together with the accompanying drawings, in which:
- Fig. 1: shows, the enrolment of a client at a service provider 1 or its registration authority;
- Fig. 2: shows a sequence of biometric elements, i.e. speech elements and face movements expressed by the client in reply to dictated speech elements provided by the registration authority of the service provider 1 during enrolment;
- Fig. 3: shows the biometric elements of Fig. 2 that were captured in reply to a challenge dictated in a different sequence;

- Fig. 4: illustrates examples of the implementation of the inventive method.

### DETAILED DESCRIPTION OF THE PREFERRED EMBODIMENTS

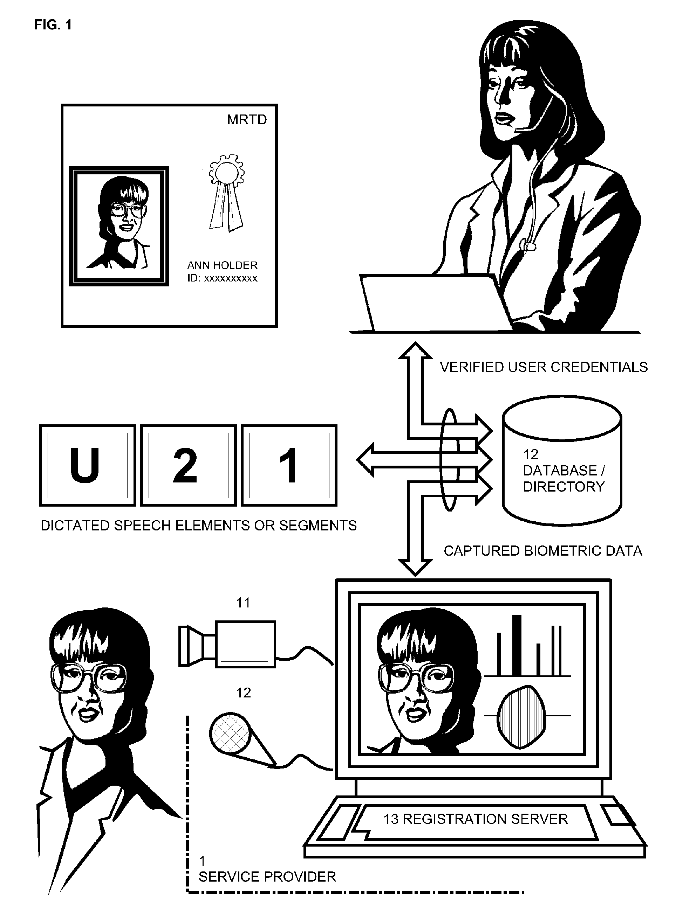

Fig. 1 shows the registration authority of a service provider 1 during enrolment of a client (client A). For this purpose the client has provided credentials, i.e. the machine readable travel document shown in Fig. 1, to the registration officer who verifies the client's credentials and establishes a non-biometric client profile.

Then, in order to establish a biometric client profile, speech elements or speech segments "U-2-1-, ..." are dictated (Challenge), which are repeated by the client (Response). For the corresponding speech elements expressed by the client, biometric audio and video samples are simultaneously captured by means of video-recording devices 11, 12 (e.g. a microphone and a digital camera) that are connected to a registration server 13. In order that all possible challenges can be executed with the inventive method preferably all speech elements, together with the related gestures of lips and tongue, are captured that are required to spell words and numbers. Typically the client will be asked to repeat all letters of the alphabet as well as all relevant numbers, e.g., 1-100, and 1000. Recorded speech elements could then be assembled and concatenated, in order to generate new words. Hence, the biometric elements captured during registration allow assembling of any possible (synthetic) response, that can subsequently be used for authenticating the client based on the delivery of biometric data that result from further challenge/response procedures.

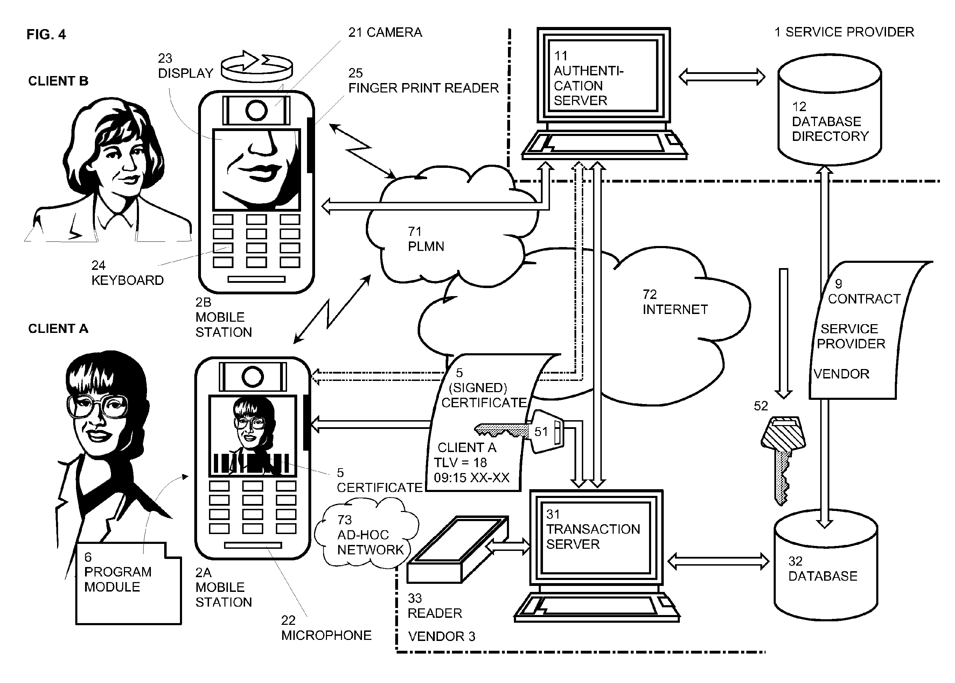

In a preferred embodiment, the complete registration process is executed with the client's mobile station 2A that comprises, as shown in figure 4, a microphone 22, a camera 21 and possibly a fingerprint reader 25. Although it is preferable to perform registration procedures at the service provider's site, the registration procedures could also be performed online by means of the client's mobile station 2 or a fixed data terminal at the client's office or home.

The captured biometric elements that represent the client's biometric profile are then stored together with the non-biometric profile in the database 12 or directory of the service provider 1.

Further stored is information, which identifies the captured biometric elements or data. This information may be stored in the form of dictated speech elements or speech segments or preferably as a code that points to the dictated speech elements or speech segments e.g. text-, audio- or graphics-files that are stored for example in the database 12 of the service provider 1. The information, which relates to the dictated speech elements or speech segments may be stored as text, which may be used as the file name for the captured audio and video sample files. E.g. the file "2.wav" would be a raw audio file that contains the waveform captured from the client for the expressed word "two". The wav-file may however be designated with a code xyz.wav with xyz pointing to the dictation "two" or "2" contained in another database; i.e. the identifier xyz would link the captured biometric data contained in one memory range to dictated data stored in another memory range.

On the screen of the registration server 13 shown in figure 1 a waveform for the word "two" is illustrated as well as a spectrogram of the waveform that represents a typical pattern for this client.

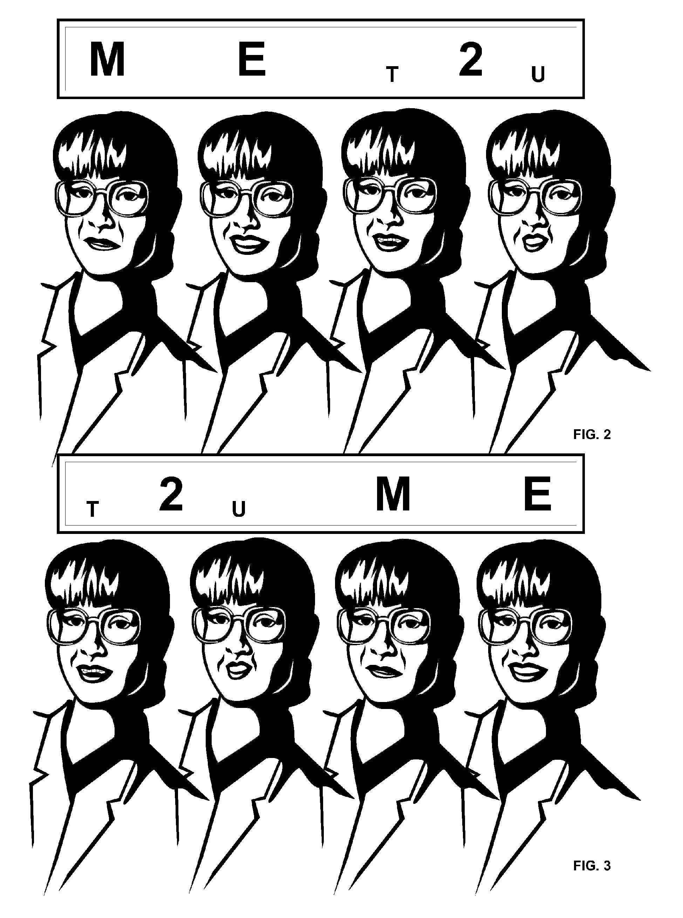

Figure 2 shows a sequence of speech elements and segments that were expressed by the client based on dictated speech elements, which were issued in text-form, in graphical form or as an audio file. Fig. 2 shows that the speech elements "T" and "U" could be replaced by the speech segment "2".

Figure 3 shows the results of the challenge and the response illustrated in figure 2 in a different sequence. Since the speech elements captured from the client during enrolment can be assembled according to any possible response, it is possible to create random challenges for authentication procedures later performed, e.g. with the authentication server 11 of the service provider 1 shown in figure 4. Due to the use of random challenges a high level of security is achieved. Hence, inventive systems preferably operate in a fully random challenge mode.

The risk that an imposter is able to provide an identical multimodal biometric response for an unforeseen random challenge is extremely low.

The details and preferred embodiments of the inventive method will be explained below with reference to Figure 4, which exemplarily shows parties that are involved in the execution of transaction, in particular client A, a service provider 1 and a vendor 3.

Client A has been registered at the service provider 1 as explained above. Hence, the authentication server 11 shown in figure 4 has access to all relevant data of client A and can authenticate client A whenever required.

As shown in figure 4, client A has not only been registered but also authenticated and provided with an authentication certificate 5 that is shown on the display 23 of the mobile station 2A. In this embodiment the authentication certificate 5 comprises at least a bar code and a photo of client A. If desired, the vendor can compare the appearance of client A with the photo displayed on the mobile station 2A. However, due to the high trust of the authentication certificate 5, checking the client's photo is an optional measure. Compulsory is the technical transfer of the authentication certificate 5 to the transaction server 31 for verification.

This transfer can be done in various ways. The authentication certificate 5, that these symbolically shown in figure 4, can be transferred over an ad-hoc network 7, such as a Bluetooth network, that is set up between the mobile station 2A and the transaction server 31.

Alternatively or in addition the transaction server 31 may be connected to a reader 33 which can read the graphical code, such as a 1-D or 2-D bar code, that is displayed on the display 23 of the mobile station 2A.

Since the client 2A has been authenticated well before she entered the vendor's premises 3, the verification of the authentication certificate 5 and subsequently the transaction can be performed without further efforts and delays. Within seconds the authentication certificate 5 will be read and transferred to the transaction server 31, which, for verification purposes, accesses the local database 32 or the authentication server 11 of the service provider 1. The transaction server 31 or the authentication server 11 compare or combine the data extracted from the authentication certificate 5 with corresponding data pre-stored for this client 2A. In the event that the data match, approval is given to perform the requested transaction.

As described above a trust level value is preferably maintained in the mobile station 2 that may be part of the authentication certificate and that represents the current status of the authentication certificate and that is changed depending on
a) the result of authentication procedures performed by the authentication server, and/or
b) the result of authentication procedures performed by the mobile station that processes biometric data that were captured during the use of the mobile station, and/or
c) the length of the time period, which started after the completion of the last authentication procedures performed by the authentication server or the mobile station. For the calculation of the trust level value, any related element, such as audio biometrics, image biometrics, fingerprint biometrics, can equally be taken into account. However, preferably weighting factors are used to assign each element a related importance. It may be found that the authentication of the user by its voice provides a high security than the authentication of the user by its movements of the lips or by face recognition, which can advantageously be implemented in addition or as an alternative to the above described authentication procedures.

The authentication certificate 5 shown in figure 4 comprises data relating to the client A, time stamp and a trust level indication that could also be generated separately by the inventive program module 6 implemented in the mobile station 2A. The trust level value could also be indicated separately on that display 23 or an alternative output device of the mobile station 2A.

It is further shown in figure 4 that an exchange of data is performed between the service provider 1 and the vendor 3 that is based on a contract 9 defining the legal aspects of all proceedings. Based on this contract 9 the vendor 3 may download all data required for performing verification procedures. For example the vendor 3 may download all required data of the client A, as a well as the public key 52 of the service provider 1, with which signed authentication certificates 5 can be decoded.

In the event that the service provider 1 acts as a Finance Institute or Credit Card Company, then the contract 9 will define in addition all financial proceedings.

Hence, it is important to note that verification proceedings can be performed by the transaction server 31 or by the authentication server 11, as agreed in the contract 9.

As further shown in figure 4, the communication between the service provider 1, the clients 2 and the vendors 3 can be performed over any suitable fixed or mobile networks, such as public mobile telecommunication networks PLMN 71 and the Internet 72. In proximity, the communication between the mobile stations 2 and the devices 11, 13; 31 of the service provider 1 and the vendor 3 may alternatively be performed over an ad-hoc network 73, such as a Bluetooth network that is established after salutation procedures have successfully been performed. Still further, the transfer of data displayed on the screen of the mobile station 2A may be transferred to the transaction server 31 via the optical reader 33.

Figure 4 further shows a Client B who may presently be in the process of
a) being registered at the service provider 1; or
b) performing an external authentication that is controlled by the authentication server 11 of the service provider 1; or
c) communicating with a third party and thus performing an automatic internal authentication that is fully controlled by the inventive program module 6 implemented in the mobile station 2B. In view of the high-performance input devices 21, 22 of current mobile stations 2, registration of a client B is preferably performed by using the mobile station 2B. Since different recording devices are avoided, biometric data captured from the client B during registration procedures will closely match with biometric data captured during subsequent authentication procedures. Biometric data captured during registration procedures by means of the mobile station 2 can easily be transferred over the public mobile telecommunication network PLMN 71 and the Internet 72 or over a local ad-hoc network to the service provider 1 (the registration server 31 or the authentication server 11). The transferred data can be signed with the client's private key of a private key infrastructure, which ensures correct registration. Hence, it is a question of the policy only, whether a service provider 1 will allow registration to take place online or request the client to visit its premises.

As mentioned above, client B could already be registered at the service provider 1, and being now in the process of external authentication. For that purpose a connection would be set up to the authentication server 11, which initiates challenge response procedures, asking client B to provide a response to a random challenge as shown in figure 2 or 3. Based on the response, client B the legitimate owner of mobile station 2B, will successfully be authenticated and provided with a corresponding authentication certificate 5.

However, client B could also be involved in a communication with a third party that is automatically observed by the inventive program module 6 that has been implemented in the mobile station 2B. Hence, the inventive program 6 will automatically capture at least audio samples that are analysed preferably by means of a digital signal processor DSP in order to obtain characteristica of the voice signals, that are compared with pre-stored characteristica of the voice of client B. Preferably, the inventive program 6 recognizes and extracts frequently spoken words, such as salutation words used by client B or the client's name, and compares said words with pre-stored words in order to automatically perform an internal authentication that would raise the trust level value related described above. Hence, if preferred embodiment is a voice recognition program is implemented in the mobile station 2 that is adapted to the owner's voice and that allows automatic extraction of words during conversation. Hence, with this embodiment of the inventive method an internal authentication of the user 2B of the mobile station 2 can be performed with an extremely high accuracy.

Hence, authentication of the user of the mobile station can easily be performed allowing revoking and deactivating the authentication certificate 5 in the event that the mobile station 2 is not used by its owner, i.e. the holder of the authentication certificate 5. In the event that the mobile station 2 is stolen by an imposter, who avoids to use the mobile station 2 for communication in order to maintain the authentication certificate 5, the time lapsed between the theft and the use of the mobile station 2 at a vendor 3 will be measured and the trust level value reduced accordingly. Still further the authentication certificate 5 may be protected by a password or by fingerprint verification procedures that are implemented in conjunction with a fingerprint reader 25 provided on the mobile station 2.

Although the present invention has been described for systems in the smallest configuration possible, the method as well as the related infrastructure, allow serving any number of clients and vendors.

The invention is not limited to any practical mobile or fixed computer terminals or networks and can easily be adapted to any future requirements or developments. In particular the present invention can be enhanced with any other or new biometric recognition technology that can be implemented in a user's mobile station.

References
[1] US 7,207,480 B1
[2] US 2003/0171993 A1

## Claims

1. Method for performing secure online transactions with a mobile station (2; 2A, 2B) comprising the steps of
a) registering the user of the mobile station (2) at a service provider (1) by recording and storing the users credentials and capturing biometric data, such as audio and video samples, in a database (12);
b) setting up a connection between the mobile station (2) and the authentication server (11) of the service provider (1) and forwarding biometric data that are captured from the user via input devices (21, 22) of the mobile station (2) to the authentication server (11) of the service provider (1);
c) authenticating the user by comparing the biometric data received from the mobile station (2) with corresponding biometric data of the registered owner of this mobile station that are retrieved by the authentication server (11) from the database (12) and checking whether said biometric data match;
d) generating and forwarding an authentication certificate (5) from the authentication server (11) to the mobile station (2) in the event that the user of the mobile station has successfully been authenticated;
e) transferring the authentication certificate (5) from the mobile station (2) to a vendor's transaction server (31) for a transaction to be performed between the user and the related vendor,; and
f) verifying the authentication certificate (5) by the transaction server (31) that proceeds with the execution of the transaction in the event that the authentication certificate (5) is valid.

2. Method according to claim 1, comprising the steps of storing identification data of the mobile station, such as the International Mobile Equipment Identity IMEI and/or the Mobile Subscriber ISDN Number MSISDN in the database (12) of the service provider (1) during registration procedures and performing authentication procedures only, if the identification data that has been transferred from the mobile station (2) to the authentication server (11) match with the corresponding identification data stored in the database (12).

3. Method according to claim 1 or 2, comprising the steps of executing challenge/response procedures in order to authenticate the user of the mobile station (2) by forwarding at least one random challenge from the authentication server (11) to the mobile station (2), capturing a corresponding response of the user with the input devices of the mobile station (2), such as the microphone (22) and the camera (21), and transmitting the captured biometric data to the authentication server (11).

4. Method according to claim 1, 2 or 3, comprising the steps of
a) generating the authentication certificate (5) by providing an encoded graphical image such as a one- or two-dimensional bar code, preferably combined with a photo of the owner of the mobile station (2); and/or
b) activating, deactivating or erasing the authentication certificate (5) that had been transferred the mobile station (2) preferably by means of a password or by means of recording and analysing the user's voice.

5. Method according to one of the claims 1 to 4, with the procedures for transferring the authentication certificate (5) to the transaction server (31) comprising the steps of
a) displaying a graphical image of the authentication certificate (5) on the display (23) of the mobile station (2) and reading the authentication certificate (5) by means of a card reader (33) that is connected to the transaction server (31); or
b) setting up a connection, such as a wireless connection of an ad-hoc network, between the mobile station (2) and the transaction server (31) and transferring the data relating to the authentication certificate (5).

6. Method according to one of the claims 1 to 5, comprising the steps of decoding the authentication certificate (5) that has been sent to the transaction server (31) and using data (51) extracted from the authentication certificate (5); such as data of the client, identification data of the mobile station (2), data relating to the service provider (1), credit card or banking information, a private key of a PKI-system issued by the service provider (1) or a time stamp indicating the time the authentication certificate (5) was issued; for the approval and execution of the transaction.

7. Method according to claim 6, with the procedures for approving the transaction by the transaction server (31) or the authentication server (11) comprising the steps of comparing or combining the data (51) extracted from the authentication certificate (5) with data (52), such as a time limit and/or symmetrical or asymmetrical data such as a public key, that is or has been retrieved from the database (12) of the service provider (1), and providing an approval signal in the event that the approval procedure has successfully been completed.

8. Method according to one of the claims 1 to 7, comprising the steps of maintaining a trust level value in the mobile station (2) that is preferably part of the authentication certificate (5) and that is changed depending on
a) the result of external authentication procedures performed by the authentication server (11), and/or
b) the result of internal authentication procedures performed by the mobile station (2) that that processes biometric data that were captured during the use of the mobile station (2) preferably with the implementation of voice recognition technology, and/or
c) the length of the time period, which started after the completion of the last authentication procedures performed by the authentication server (11) or the mobile station (2).

9. Method according to one of the claims 1 to 8, comprising the steps of revoking the authentication certificate (5) in the event that an external authentication procedure performed by the authentication server (11) or an internal authentication procedure performed by the mobile station (2) has failed, and/or in the event that the trust level value has fallen under a preset value and/or a time limit has passed that was set when the authentication certificate (5) was issued or an external or internal authentication procedure was performed.

10. Method according to claim 8 or 9, comprising the steps of selecting the limit of the transaction value according to the current trust level of the authentication certificate (5).

11. Method according to one of the claims 1 to 10, wherein the procedures for registering and authenticating the user of the mobile station (2) comprise the steps of providing a challenge, such as a sequence of numbers and letters, and capturing as a response biometric data that relate to movements of the client's mouth region, particularly movements of the lips and tongue as well as simultaneously capturing corresponding audio information.

12. A mobile station (2) such as mobile phone comprising a camera (21), preferably a camera (21) that is rotatable within an angle of at least 180°, microphone (22) and a computer program (6) that allows implementation of the method as defined in one of the claims 1 to 10.

13. A mobile station (2) according to claim 12, comprising
a) a networking module, such as Bluetooth equipment, which allows setting up an ad-hoc network connection to the authentication server (11) for performing registration procedures and/or to the transaction server for transferring the authentication certificate (5) and related data; and/or
b) a digital signal processor that allows analysing voice signals extracted during the use of the mobile station (2); and/or
c) a voice recognition system that allows identifying and extracting word samples that are compared with word samples pre-stored in the mobile station (2).

14. A mobile station (2) according to claim 12 or 13, with the computer program (6) allowing
a) capturing biometric data from the input devices (21, 22) of the mobile station (2), packing the captured biometric data into a corresponding file that can be sent to the authentication server (11) for registration or authentication purposes; and/or
b) authenticating the user of the mobile station (2) based on biometric data obtained from the input devices (21, 22) of the mobile station (2) and biometric data stored in memory of the mobile station (2).

15. A mobile station (2) according to one of the claims 11 to 14, with the computer program (6) being designed to be controlled by the keyboard (24) of the mobile station (2), by signals taken from a fingerprint reader of the mobile station (2) or by voice commands that are used for authenticating the user of the mobile station (2) preferably before the transfer of the authentication certificate (5).
